# EUROPÄISCHE PATENTSCHRIFT

(11) **EP 1 111 405 B1**
(45) Veröffentlichungstag und Bekanntmachung des Hinweises auf die Patenterteilung: **07.06.2006**
(21) Anmeldenummer: 00204472.5
(22) Anmeldetag: 12.12.2000
(51) Int. Cl.: G01T 1/00, G01T 1/202

(54) **Flacher Röntgendetektor mit Alkalihalogenid-Scintillator**
Flat X-ray detector with alkali-metal-halide scintillator
Détecteur plat de rayonnement X avec scintillateur à halogénure de métal alcalin

(30) Priorität: 21.12.1999 DE 19961673
(43) Veröffentlichungstag der Anmeldung: 27.06.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Boerner, Herbert, Dr., Habsburgerallee 11, 52064 Aachen (DE); Nikol, Hans, Dr., Habsburgerallee 11, 52064 Aachen (DE); Wieczorek, Herfried, Dr., Habsburgerallee 11, 52064 Aachen (DE)
(74) Vertreter: Volmer, Georg

(56) Entgegenhaltungen:
- WO-A-99/39395
- DE-A- 19 519 775
- GB-A- 2 034 148
- US-A- 4 242 221
- US-A- 4 933 562
- PATENT ABSTRACTS OF JAPAN vol. 1998, no. 02, 30. Januar 1998 (1998-01-30) -& JP 09 264963 A (YAZAKI CORP), 7. Oktober 1997 (1997-10-07)

## Beschreibung

Die Erfindung betrifft einen Röntgendetektor, insbesondere für Röntgenradiographie und Röntgenfluoreszenzanalyse, ausgerüstet mit einem Scintillator, der ein Alkalihalogenid mit einer Dotierung enthält, und mit einem Photodioden-Array, das mindestens eine Photodiode umfasst, die ein Halbleitermaterial enthält.

In der Röntgenradiographie und Röntgenfluoreszenzanalyse wird die Röntgenstrahlung analysiert, die von einer Röntgenquelle emittiert und beim Durchgang durch den menschlichen Körper oder ein Werkstoff je nach dessen Dichte absorbiert und geschwächt worden ist. Es gibt verschiedene Möglichkeiten, die Röntgenstrahlung weiter zu bearbeiten. In einem Röntgendetektor wird das gewonnene Röntgenschattenbild zunächst von einem Scintillator absorbiert und in dem Scintillator in eine weniger energiereiche Lumineszenzstrahlung im sichtbaren oder UV-Bereich transponiert. Diese Lumineszenzstrahlung wird dann an ein Array von Photodioden weitergegeben. In den Photodioden wird die Lumineszenzstrahlung in ein elektrisches Signal umgewandelt, das über eine Ausleseelektronik weiter verarbeitet werden kann. Durch die Kombination von Scintillator und Photodioden-Array läßt sich so ein digitales Bild der einfallenden Röntgenstrahlung erhalten.

Als Scintillatoren für Röntgendetektoren sind dotierte Alkalihalogenide besonders geeignet, weil sie einen hohen Massenextinktionskoeffizienten für Röntgenstrahlung haben. Röntgendetektoren mit derartigen Scintillatoren sind aus DE 195 19 775 bekannt.

Aus US 4,242,221 ist ein optisch transparenter Szintillationsdetektor bekannt, der ein Leuchtstoffmaterial ausgewählt aus der Gruppe die aus BaFCl:Eu, LaoBr:Tb, CsI:Tl, CaWO₄und CdWO₄ besteht, enthält.

Aus WO 99/39395 ist ein organischer Photodetektor bekannt, der für die Detektion von einer oder mehrerer Farben eine Farbfilterbeschichtung aufweist.

Weiterhin ist aus GB 2 034 148 ein Szintillator für Gammstrahlung bekannt, der neben dem Szintillatormaterial einen wellenlängenkonvertierenden Leuchtstoff enthält.

Die spektrale Verteilung und die Lichtausbeute des im Scintillator erzeugten Lumineszenzlichtes ist dabei abhängig von der gewählten Dotierung für die Alkalihalogenide.

Auch die nachgeschalteten Photodioden sprechen nicht gleichmäßig über den in Frage kommenden Frequenzbereich des Lumineszenzlichtes an. Bestimmte Frequenzbereiche des Lumineszenzlichtes haben eine hohe Ansprechschwelle in den Photodioden und mindern deshalb die Empfindlichkeit des Röntgendetektors in diesem Bereich. In der Regel liegt so die Wellenlänge des Lumineszenzlichtes des Scintillators außerhalb des Maximums der Fotoempfindlichkeit der Photodioden.

Es ist die Aufgabe der vorliegenden Erfindung, einen Röntgendetektormit hoher Effizienz zur Verfügung zu stellen, ausgerüstet mit einem Scintillator, der ein Alkalihalogenid mit einer Dotierung enthält, und mit einem Photodioden-Array, das mindestens eine Photodiode umfasst, die ein Halbleitermaterial enthält.

Erfindungsgemäß wird die Aufgabe gelöst durch einen Röntgendetektor, ausgerüstet mit einem Scintillator, der ein Alkalihalogenid mit einer Dotierung enthält, und mit einem Photodioden-Array, das mindestens eine Photodiode, die ein Halbleitermaterial enthält, umfasst, wobei zwischen Scintillator und dem Photodioden-Array eine Farbwandlerschicht, die einen photolumineszenten Leuchtstoff enthält, direkt auf den Scintillator ohne Luftschicht dazwischen angeordnet ist, so dass Reflexionsverluste zwischen den Schichten minimiert sind.

Der photolumineszente Leuchtstoff in dem Farbwandler macht einen größeren Anteil der Röntgenstrahlung für die Bildanalyse nutzbar. Der Leuchtstoff absorbiert die Lumineszenzstrahlung und setzt sie in Lumineszenzstrahlung um, die der spektralen Empfindlichkeit der Photodiode angepaßt ist, so dass das Emissionsspektrum des Scintillators und das Empfindlichkeitsspektrum der Photodiode maximal überlappen und die Photodiode mit maximaler Quanteneffektivität arbeiten kann.

Nach einer Variante der Erfindung kann der Farbwandler zwei oder mehr photolumineszente Leuchtstoffe enthalten. Dies gilt für den Fall, dass der Farbwandlungseffekt eines Leuchtstoffes nicht stark genug ist. Dann kann durch Kombination von mehreren Leuchtstoffen ein Kaskadeneffekt erreicht werden, mit dem die Lumineszenzstrahlung in den gewünschten Wellenlängenbereich transferiert wird.

Nach einer bevorzugten Ausführungsform der Erfindung enthält der Scintillator ein Alkalihalogenid mit einer Dotierung, das ein Emissionsmaximum bei einer Wellenlänge λ von 400 bis 440 nm hat.

Besonders bevorzugt ist, dass der Scintillator als dotiertes Alkalihalogenid CsJ:Na enthält. CsJ:Na emittiert ein energiereiches Lumineszenzspektrum im Wellenlängenbereich zwischen 400 und 440 nm, es hat eine kurze Abklingzeit; die erzeugten Bilder sind frei von Memoryeffekten und Verlusten durch strahlungslose Umwandlungsprozesse.

In einer weiteren Ausführungsform der Erfindung kann vorgesehen sein, dass die Photodiode als Halbleitermaterial amorphes Silicium enthält. Für Photodioden aus amorphem Silicium, insbesondere in Kombination mit einem Scintillator aus CsJ:Na oder CsJ:CO₃²⁻ hat es sich als besonders vorteilhaft erwiesen, wenn der photolumineszente Leuchtstoff ein grüner Leuchtstoff ist.

Als grüner Leuchtstoff sind ein Perylenderivatet, SrGa₂S₄:Eu, ZnS:Cu,Au, BaMgAl₁₀O₁₇:Eu,Mn oder YAG:Ce besonders geeignet.

Besonders bevorzugt ist eine Ausführungsform, in der das Photodioden-Array ein großflächiger, matrix-adressierter Bildsensor auf einer TFT-Matrix ist.

Nachfolgend wird die Erfindung weiter erläutert.

Der Röngendetektor ist mit einem Scintillator, einem Photodioden-Array und einem dazwischen liegenden Farbwandler, der einen Leuchtstoff enthält, ausgerüstet. Üblicherweise sind sowohl der Scintillator als auch das Photodioden-Array und der Farbwandler jeweils als Schicht ausgebildet und zu einem Schichtsystem kombiniert.

Eine Scintillatorschicht bildet den Eingangsschirm für die Röntgenstrahlung. Unter der Scintillatorschicht ist die Farbwandlerschicht angeordnet, auf welche die Photodiodenschicht folgt. Von der Photodiodenschicht gehen elektrische Kontaktleitungen zu der Ausleseelektronik.

Der Scintillator enthält als wesentliches Element eine Schicht aus einem Alkalihalogenid, das mit einem Fremdion dotiert ist. Die Fremdionen, wie Tl(I), Ga(I), In(I) oder ein zweites Alkali-Ion werden in das Kristallgitter des Alkalihalogenids inkorporiert und erzeugen dadurch Lumineszenszentren. Der Scintillator muß eine gute Absorptionsfähigkeit für Röntgenstrahlung haben, d.h. er soll Elemente mit hoher Atomnummer enthalten. Durch Aufdampfverfahren können Scintillatorenschichten mit einer Säulenstruktur erzeugt werden, die durch Bündelung des Lichtes in den langgestreckten Scintillatorkristallen eine gute Ortsauflösung ermöglichen. Für Scintillatorkristalle mit regulärer Kristallform soll die Kristallgröße klein sein um eine gute Ortsauflösung zu ermöglichen. Zudem soll die Abklingzeit kurz sein, damit auch Bewegungsvorgänge erfaßt werden können. Eine Auswahl von dotierten Alkalihalogeniden, die diese Bedingungen erfüllen, ist in Tabelle I zusammengestellt.

**Tabelle I**

| Wirtskristall | Aktivator | Emissionsmaximum[nm] |
|---|---|---|
| LiJ | Eu | 440 |
| NaJ | Tl | 410 |
| CsJ | Tl | 565-600 |
| CsJ | Na | 430 |
| LiF | Mg | 400 |
| LiF | Mg,Ti | 400 |
| LiF | Mg, Na | 400 |

Die Scintillatorschichten aus dotiertem Alkalihalogenid werden üblicherweise durch Aufdampfen der Verbindungen auf ein Substrat hergestellt. Die Scintillatorschichten können daher auch noch ein Substrat umfassen. Als Substrat kann der Detektor dienen, z. B. ein Detektor mit Fotodioden aus amorphem Silicium auf einer Glasplatte. Auch Glasplatten selbst, Aluminiumblech und Scheiben aus Aluminiumoxid sind als Substrate für den Scintillator geeignet. Diese Scintillatoren werden mit dem Detektor verklebt.

In den Photodioden werden die Lichtsignale in elektrische Signale umgewandelt. Die durch die Strahlungsabsorption erzeugten Elektronen-Loch-Paare werden im Feld des pn-Überganges getrennt und liefern einen Strom über die äußeren Elektroden.
Die langwellige Grenze des spektralen Empfindlichkeitsbereiches ist durch den Bandabstand des Halbleitermaterials, d.h. in der Regel Silicium, festgelegt. Die spektrale Empfindlichkeitsverteilung einer Silicium-Photodiode kann in begrenztem Umfang durch die Herstellungstechnologie beeinflusst werden.

Bevorzugt verwendet werden Photodioden-Arrays, die mit TFT-Transistoren zu großflächigen Bildsensoren kombiniert sind. Als Halbleitermaterial kommt für diese großflächigen Dioden-Arrays mit Wasserstoff abgesättigtes amorphes Silicium (a-Si:H) oder polykristallines Silicium (p-Si) in Einsatz. Deren Maximum der spektralen Empfindlichkeit liegt zwischen 550 und 600 nm.

Zwischen der Scintillatorschicht und der Schicht mit dem Photodioden-Array ist die Farbwandlerschicht eingeschoben. Die Farbwandlerschicht enthält einen photolumineszenten Leuchtstoff. Der Farbwandlersphospor transponiert das Lumineszenzlicht des Scintillators in einen Wellenlängenbereich, der mit dem Maximum der spektralen Empfindlichkeit der Photodiode übereinstimmt.

Nach dem Grundprinzip der Photolumineszenz kann Licht, einer Farbe die energetisch höher liegt, in Licht einer Farbe die energetisch tiefer liegt, umgewandelt werden. Aus Licht aus dem blauen Wellenlängenbereich können alle anderen Farben erhalten werden, da die blaue Farbe die höchstenergetische aller Spektralfarben darstellt. Beleuchtet man einen photolumineszenten Leuchtstoff, der grün emittiert, mit dem blauen Licht eines Scintillators, so wird der grüne Farbstoff durch das blaue Licht angeregt und emittiert nachfolgend grünes Licht.

Wird die Farbwandlerschicht direkt auf den Scintillator ohne Luftschicht dazwischen aufgebracht, kann die Quantenkonversionsausbeute bis zu 90 % erreichen, weil so Reflexionsverluste zwischen den Schichten minimiert sind.

Grüne Farbstoffe haben im allgemeinen eine sehr gute Absorption für blaues Licht.

Rote Farbstoffe, die als Farbwandler für Photodioden geeignet sind, deren Maximum der spektralen Empfindlichkeit im roten bis infraroten Bereich liegt, zeigen meist nur eine geringe Absorption im Blauen und können daher mit blauem Licht nicht effizient angeregt werden. Sie eignen sich aber als Farbwandler für grün emittierende Scintillatoren. Alternativ kann man einen roten Farbstoff mit einem grünen koppeln und eine Kaskadenkonversion von Blau über Grün nach Rot erzielen.

Als Leuchtstoffe für die Farbwandlerschicht werden organische und anorganische Leuchtstoffe mit hoher Photolumineszenzquantenausbeute verwendet. Geeignet sind als grüne Leuchtstoffe Perylenderivate wie Vat Green 1, C. I. 59825 oder die anorganischen Leuchtstoffe SrGa₂S₄:Eu mit einem Emissionsmaximum bei 535 nm, ZnS:Cu,Au mit einem Emissionsmaximum bei 540 nm, BaMgAl₁₀O₁₇:Eu,Mn mit einem Emissionsmaximum bei 520 nm oder YAG:Ce mit einem Emissionsmaxium um bei 550 nm.

Um homogene Farbwandlerschichten herstellen zu können, werden die Leuchtstoffe bevorzugt in eine Matrix aus einem polymeren Kunstharz eingebettet. Beispielsweise kann sie in die Polyimidschicht eingebettet werden, mit der Photodioden üblicherweise gegen Umwelteinflüsse geschützt werden. Sie können aber auch in eine separate Schicht auf der Photodiode oder auf dem Scintillator aufgebracht werden und dafür in eine Matrix aus einem Kunstharz wie Polymethylmetacrylat, Polystyrol u.ä. eingebettet werden. Als Herstellungsverfahren für diese Schichten eignet sich besonders das Spin-Coating-Verfahren.

Als vorteilhaft hat sich eine Kombination erwiesen mit einem Scintillator, der als dotiertes Alkalihalogenid CsJ:Na enthält, mit einem grünen Perylenpigment als Farbwandler und einem großflächigen matrix-adressierten Bildsensor aus amorphen Silicium auf einem Glassubstrat. CsJ:Na strahlt ein energiereiches Licht ab, das von dem grünen Leuchtstoff sehr gut absorbiert wird und in eine Wellenlängenbereich um 520 nm transformiert wird. Die Photodiode aus amorphen Silicium hat in diesem Bereich das Maximum der spektralen Empfindlichkeit. Da es durch den Farbwandler vermieden wird, dass Licht aus dem roten oder infraroten Bereich von der Photodiode verarbeitet werden muß, kann die Schichtdicke für das Silicium relativ gering gehalten werden und Produktionskosten gespart werden. Gleichzeitig wird das Trapping von Ladungsträgern in der amorphen Siliciumschicht, das durch transiente Fotoströme zu Geisterbildern führt, vermieden.

## Patentansprüche

1. Röntgendetektor, ausgerüstet mit einem Scintillator, der ein Alkalihalogenid mit einer Dotierung enthält, und mit einem Photodioden-Array mit mindestens einer Photodiode, die ein Halbleitermaterial enthält,
**dadurch gekennzeichnet,**
**dass** zwischen Scintillator und dem Photodioden-Array eine Farbwandlerschicht, die einen photolumineszenten Leuchtstoff enthält, direkt auf den Scintillator ohne Luftschicht dazwischen angeordnet ist, so dass Reflexionsverluste zwischen den Schichten minimiert sind.

2. Röntgendetektor nach Anspruch 1,
**dadurch gekennzeichnet,**
**dass** die Farbwandlerschicht zwei oder mehr photolumineszente Leuchtstoffe enthält.

3. Röntgendetektor nach Anspruch 1,
**dadurch gekennzeichnet,**
**dass** der Scintillator ein Alkalihalogenid mit einer Dotierung enthält, das ein Emissionsmaximum bei einer Wellenlänge λ von 400 bis 440 nm hat.

4. Röntgendetektor nach Anspruch 1,
**dadurch gekennzeichnet,**
**dass** der Scintillator CsJ:Na oder CsJ: CO₃²⁻ enthält.

5. Röntgendetektor nach Anspruch 1,
**dadurch gekennzeichnet,**
**dass** die Photodiode als Halbleitermaterial amorphes Silicium enthält.

6. Röntgendetektor nach Anspruch 5,
**dadurch gekennzeichnet,**
**dass** der photolumineszente Leuchtstoff ein grüner Leuchtstoff ist.

7. Röntgendetektor nach Anspruch 6,
**dadurch gekennzeichnet,**
**dass** der grüne Leuchtstoff Leuchtstoffe ein Perylenderivatet, SrGa₂S₄:Eu, ZnS:Cu,Au, BaMgAl₁₀O₁₇:Eu,Mn oder YAG:Ce ist.

8. Röntgendetektor nach Anspruch 1,
**dadurch gekennzeichnet,**
**dass** das Photodioden-Array ein großflächiger, matrix-adressierter Bildsensor auf einer TFT-Matrix ist.

## Claims

1. An X-ray detector comprising a scintillator including a doped alkali halogenide, and comprising an array of photodiodes including at least one photodiode containing a semiconductor material, **characterized in that** a color-transformation layer containing a photoluminescent phosphor is arranged between the scintillator and the array of photodiodes, directly on the scintillator without an intermediate air layer, so that reflection losses between the layers are minimized.

2. An X-ray detector as claimed in claim 1, **characterized in that** the color transformation-layer contains two or more photoluminescent phosphors.

3. An X-ray detector as claimed in claim 1, **characterized in that** the scintillator comprises a doped alkali halogenide having an emission maximum at a wavelength λ in the range from 400 to 440 nm.

4. An X-ray detector as claimed in claim 1, **characterized in that** the scintillator contains CsJ:Na or CsJ:CO₃²⁻.

5. An X-ray detector as claimed in claim 1, **characterized in that** the photodiode contains amorphous silicon as the semiconductor material.

6. An X-ray detector as claimed in claim 5, **characterized in that** the photoluminescent phosphor is a green phosphor.

7. An X-ray detector as claimed in claim 6, **characterized in that** the green phosphor is a perylene derivative, SrGa₂S₄:Eu, ZnS:Cu,Au, BaMgAl₁₀O₁₇:Eu,Mn or YAG:Ce.

8. An X-ray detector as claimed in claim 1, **characterized in that** the array of photodiodes is a large-surface matrix-addressed image sensor on a TFT matrix.

## Revendications

1. Détecteur de rayons X équipé d'un scintillateur, qui contient un halogénure alcalin avec un dopage et d'un réseau de photodiodes avec au moins une photodiode qui contient un matériau semi-conducteur,
**caractérisé en ce**
**qu'**entre le scintillateur et le réseau de photodiodes une couche de convertisseur couleur qui contient une substance photoluminescente est disposée directement sur le scintillateur sans couche d'air dans l'intervalle de telle sorte que les pertes de réflexion entre les couches soient minimisées.

2. Détecteur de rayons X selon la revendication 1,
**caractérisé en ce**
**que** la couche de convertisseur couleur contient deux substances photoluminescentes ou plus.

3. Détecteur de rayons X selon la revendication 1,
**caractérisé en ce**
**que** le scintillateur contient un halogénure alcalin avec un dopage qui a un maximum d'émission à une longueur d'ondes λ de 400 à 440 nm.

4. Détecteur de rayons X selon la revendication 1,
**caractérisé en ce**
**que** le scintillateur contient du CsJ:Na ou CsJ:CO₃²⁻.

5. Détecteur de rayons X selon la revendication 1,
**caractérisé en ce**
**que** la photodiode contient du silicium amorphe comme matériau semi-conducteur.

6. Détecteur de rayons X selon la revendication 5,
**caractérisé en ce**
**que** la substance photoluminescente est une substance luminescente verte.

7. Détecteur de rayons X selon la revendication 6
**caractérisé en ce**
**que** la substance luminescente verte est un dérivé de pérylène, SrGa₂S₄:Eu, ZnS:Cu, Au, BaMgAl₁₀O₁₇:Eu,Mn ou YAG:Ce.

8. Détecteur de rayons X selon la revendication 1,
**caractérisé en ce**
**que** le réseau de photodiodes est un capteur d'image à adressage matriciel de grande surface sur une matrice TFT.
